# FASCICULE DE BREVET EUROPEEN

(11) **EP 3 042 810 B1**
(45) Date de publication et mention de la délivrance du brevet: **16.09.2020**
(21) Numéro de dépôt: 15200922.1
(22) Date de dépôt: 17.12.2015
(51) Int. Cl.: B60S 1/38

(54) **BALAI D'ESSUIE-GLACE**
SCHEIBENWISCHERARM
WINDSCREEN WIPER

(30) Priorité: 12.01.2015 FR 1550204
(43) Date de publication de la demande: 13.07.2016
(73) Titulaire: Valeo Systèmes d'Essuyage, 78322 Le Mesnil Saint Denis (FR)
(72) Inventeur: THEBAULT, Denis, 63000 Clermont Ferrand (FR)
(74) Mandataire: Valeo Vision

(56) Documents cités:
- EP-A1- 1 627 787
- WO-A1-2011/023235
- DE-A1-102011 078 197
- FR-A1- 2 910 414
- FR-A1- 2 928 887
- KR-B1- 100 676 957
- US-A1- 2003 159 229

## Description

Le domaine de la présente invention est celui des équipements pour les véhicules, et plus particulièrement celui des équipements pour l'essuyage du pare-brise des automobiles.

Les automobiles sont couramment équipées de systèmes d'essuie-glace pour assurer un lavage du pare-brise et éviter que la vision qu'a le conducteur de son environnement soit perturbée. Ces essuie-glaces sont classiquement entraînés par un bras effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits, soit, dans une version plus récente dénommée "flat blade" (pour "lame plate"), d'un ensemble semi-rigide qui maintient la lame racleuse sur toute sa longueur.

Un balai d'essuie-glace semi-rigide, du type flat blade, est classiquement constituée par trois éléments qui s'étendent tout le long du balai : on trouve dans l'ordre, en partant du pare-brise et en s'éloignant perpendiculairement à celui-ci : une partie souple en élastomère constituant la lame racleuse, une partie centrale ou corps longitudinal qui comporte en son sein une ou plusieurs lamelles en métal ou en polymère dur pour donner un cintrage intrinsèque au balai et favoriser l'application de la lame sur le pare-brise, et enfin un becquet, ou déflecteur, en forme de profil aérodynamique qui utilise le vent créé par la vitesse du véhicule pour exercer une force de maintien du balai contre le pare-brise.

La lame racleuse a, vers le bas, globalement une forme triangulaire s'amincissant progressivement avec un sommet inférieur qui se déplace sur le pare-brise et un côté supérieur qui est rattaché par une bande élastique mince, directement ou indirectement, au corps du balai. Cette bande mince permet, en se déformant, au pied de la lame racleuse de s'incliner vers le pare-brise, dans un sens puis dans l'autre, lors des mouvements de va-et-vient du balai. Cette lame est l'organe qui est le plus soumis à l'usure et il est préférable de pouvoir effectuer son remplacement sans avoir à remplacer tout le balai.

On a déjà proposé de former le corps et la lame racleuse du balai en une seule pièce pour simplifier la fabrication du balai, en faisant porter la lame racleuse par deux vertèbres de cintrage, en forme de lamelles. Les vertèbres de cintrage, généralement au nombre de deux, s'étendent longitudinalement, parallèlement l'une à l'autre, et viennent se positionner de part et d'autre d'une cloison centrale de la lame. Cette technologie rend l'assemblage plus difficile, avec une manipulation peu aisée des deux vertèbres qui doivent être maintenues ensemble lors de leur introduction dans des rainures latérales de la lame racleuse. De plus le remplacement de la lame seule est difficile du fait qu'elle comporte nécessairement un moyen de retenue du corps qui émerge vers le haut et qui n'est en général pas compatible avec le connecteur lors du montage ou du démontage de la lame.

On a, par ailleurs, constaté que ce type de balai n'assure en général pas un essuyage efficace du pare-brise car la lame racleuse n'est pas maintenue efficacement. En effet, un jeu résiduel peut exister entre la vertèbre et le corps, ce qui favorise des déplacements de la lame par rapport à la vertèbre en utilisation. L'angle de calage de la lame sur le pare-brise n'est alors plus maîtrisable, ce qui diminue de manière significative l'efficacité de l'essuyage.

Il a alors été proposé d'adjoindre un organe longitudinal de maintien de la lame racleuse, qui reçoit la vertèbre de cintrage. Cet ajout permet, en outre, de rendre plus facile le coulissement de la vertèbre pour son introduction ou son retrait du balai. Cette solution a néanmoins pour inconvénient d'être plus complexe à fabriquer. WO-A-2011/023235 montre le préambule de la revendication 1.

L'invention a donc pour but de proposer un balai d'essuie-glace à organe de maintien de la lame, qui ne présente les problèmes précédents et dont la lame racleuse seule peut facilement être remplacée, par exemple en cas d'usure.

A cet effet l'invention a pour objet un ensemble pour un balai d'essuie-glace de pare-brise de véhicule, notamment automobile, comportant un corps longitudinal configuré pour porter une ladite lame racleuse, au moins une vertèbre de rigidification s'étendant le long dudit corps pour assurer son cintrage, et un déflecteur s'étendant à partir dudit corps et présentant un profil aérodynamique, caractérisé en ce que ledit corps comporte une paroi plane, ladite au moins une vertèbre étant en contact, pour au moins une partie d'une première face, avec une face de ladite paroi et pour au moins une partie d'une seconde face avec le déflecteur, ledit corps étant positionné entièrement du même côté par rapport à sa première face, le corps et le déflecteur étant réalisés dans deux matériaux différents et caractérisé en ce qu'il comporte deux vertèbres positionnées latéralement dans l'alignement l'une de l'autre et séparées par une cloison du déflecteur.

La présence d'une paroi plane permet de faire glisser latéralement les vertèbres, sans être obligé de les faire entrer par une des extrémités du corps du balai et de réduire la complexité de ce corps pour sa fabrication. Par ailleurs le maintien d'un contact entre la vertèbre et le matériau du déflecteur permet de profiter du coefficient de friction relativement élevé de ce matériau et de garantir la tenue de la vertèbre sur le balai, sans qu'il soit nécessaire d'introduire des clips de retenue.

De façon préférentielle le corps comporte deux crochets s'étendant à partir de ladite paroi plane et conformés pour porter, de façon amovible, ladite lame racleuse. La possibilité d'un remplacement de la lame seule après usure, est ainsi obtenue.

Préférentiellement le corps et le déflecteur sont rattachés l'un à l'autre par ladite cloison et réalisés par co-extrusion.

De façon préférentielle le matériau du déflecteur au niveau de sa face en contact avec ladite au moins une vertèbre, présente un coefficient de friction supérieur à celui de ladite face de ladite paroi plane. Le contact entre la vertèbre et le matériau du déflecteur assure ainsi le maintien en position de la vertèbre.

Dans un mode de réalisation ladite face de ladite paroi plane est au moins partiellement recouverte d'une couche mince à coefficient de friction supérieur à celui du matériau de ladite paroi plane. Le contact entre la vertèbre et la paroi plane garantit ainsi le maintien en position de la vertèbre.

Dans un mode particulier de réalisation la face du déflecteur en contact avec ladite au moins une vertèbre s'étend latéralement au moins jusqu'à une extrémité latérale de ladite au moins une vertèbre.

Préférentiellement ladite extrémité latérale de la face du déflecteur recouvre l'extrémité latérale de ladite au moins une vertèbre, formant ainsi un ergot de retenue latérale de ladite au moins une vertèbre. Cet ergot garantit le maintien de la vertèbre, quelque soit le niveau de la friction entre la vertèbre et ses parois de contact.

Dans un mode plus particulier de réalisation ledit ergot s'étend de façon à recouvrir au moins partiellement la face de ladite paroi plane opposée à la face en contact avec ladite au moins une vertèbre.

Dans un autre mode plus particulier de réalisation ledit ergot s'étend verticalement jusqu'au niveau de ladite seconde face.

Dans un autre mode de réalisation ladite face de ladite paroi plane en contact avec ladite au moins une vertèbre s'étend latéralement jusqu'à une extrémité latérale de ladite au moins une vertèbre.

De façon plus avantageuse, ladite face du déflecteur et ladite face de ladite paroi plane s'étendent latéralement jusqu'à une extrémité latérale de ladite au moins une vertèbre.

L'invention porte aussi sur un balai d'essuie-glace de pare-brise de véhicule, notamment automobile, comportant un ensemble tel que décrit ci-dessus, et une lame racleuse portée par ledit corps.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.
Sur ces dessins :
- la figure 1 est une vue en coupe transversale d'un premier balai d'essuie-glace selon l'art antérieur ;
- la figure 2 est une vue en coupe transversale d'un second balai d'essuie-glace selon l'art antérieur ;
- la figure 3 est une vue en coupe transversale d'un balai d'essuie-glace selon un premier mode de réalisation de l'invention ;
- la figure 4 est une vue en coupe transversale d'un balai d'essuie-glace selon un second mode de réalisation de l'invention ;
- la figure 5 est une vue en coupe transversale d'un balai d'essuie-glace selon un troisième mode de réalisation de l'invention ;
- la figure 6 est une vue en coupe transversale d'un balai d'essuie-glace selon un quatrième mode de réalisation de l'invention.

Dans l'ensemble de la description les termes haut et bas font référence à une plus ou moins grande distance du point considéré au pare-brise et les termes amont ou aval font références au sens de circulation de l'air sur le pare-brise. Enfin, les termes vertical et horizontal se réfèrent aux directions, respectivement perpendiculaire et tangente au pare-brise, au point où se situe le balai d'essuie-glace. La direction latérale est la direction horizontale qui est perpendiculaire à la plus grande longueur du balai.

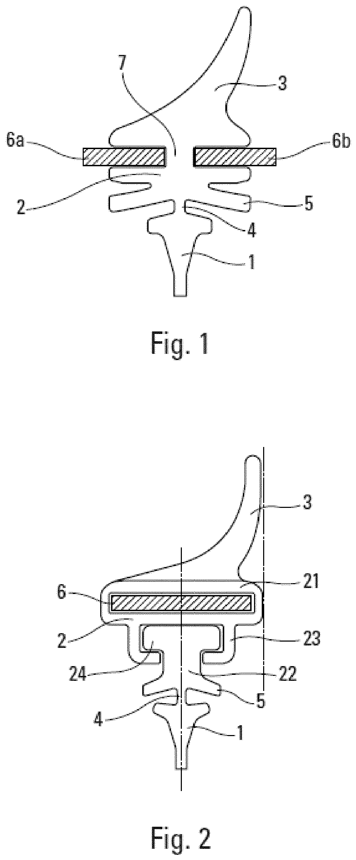

En se référant à la figure 1, on voit, en coupe, un premier balai d'essuie-glace selon l'art antérieur comportant de bas en haut une lame racleuse 1, une partie centrale 2 et un déflecteur 3. Le pied de la lame racleuse 1 a sensiblement la forme d'un sapin inversé, c'est-à-dire d'un triangle isocèle dont le sommet est positionné vers le bas et dont la fonction est de racler le pare-brise pour évacuer l'eau qui s'y trouve. Cette lame racleuse 1 est positionnée dans le plan de symétrie de la partie centrale 2 du balai à laquelle elle est rattachée par une bande mince 4 flexible, ce qui laisse la lame racleuse s'incliner vers l'amont ou vers l'aval selon le sens de rotation du balai lors de son mouvement de va-et-vient. Ce mouvement d'inclinaison est toutefois limité par deux languettes élastiques 5 qui s'étendent sensiblement horizontalement depuis le plan de symétrie de la partie centrale 2, respectivement vers l'amont et vers l'aval, pour servir de butées élastiques et limiter l'amplitude de la rotation de la lame racleuse autour de la bande mince 4.
La partie centrale 2 a une forme sensiblement parallélépipédique dont les côtés du rectangle, en coupe, sont horizontaux et verticaux. Elle est découpée par deux rainures horizontales, en forme de gorges, dans lesquelles sont insérées deux lamelles rigides 6a et 6b, dites vertèbres, elles aussi horizontales, qui tendent à donner un cintrage intrinsèque au balai pour assurer son application sur le pare-brise, y compris dans le cas d'un pare-brise incurvé. Les vertèbres 6a et 6b sont disposées en vis-à-vis, de part et d'autre du plan de symétrie de la partie centrale 2 et sont séparées l'une de l'autre par une cloison centrale 7 formée par un rétrécissement de la partie centrale.
Le déflecteur 3 forme la partie supérieure du balai, et constitue une partie non symétrique, située au dessus de la partie centrale 2. Le déflecteur s'étend à l'intérieur d'un triangle rectangle dont le premier côté formant base est constitué par le sommet de la partie centrale 2, dont le second côté forme une face aval sensiblement verticale et dont le troisième côté, ou hypoténuse, forme une face orientée face au vent et présentant un profil aérodynamique qui est choisi de façon à optimiser, en force et en direction, les forces aérodynamiques générées par le courant d'air circulant sur le pare-brise.
La figure 2 représente une autre version d'un balai d'essuie-glace de l'art antérieur. Dans cette version la partie centrale est réalisée en deux parties, une d'elles étant constituée par la lame racleuse 22 pour permettre le remplacement de celle-ci sans avoir à mettre la totalité du balai au rebut. La lame racleuse 22 comporte ainsi un support de lame 24 de forme parallélépipédique, deux languettes élastiques 5 dont la fonction est identique à celles du balai de la figure 1 et un pied de lame 1. Comme précédemment, le pied de lame 1 a une forme de sapin inversé et est rattaché au support de lame 24 par une bande mince flexible 4. L'autre partie de la partie centrale est constituée par un corps 21, creux, qui renferme une vertèbre 6 monobloc et duquel s'étendent vers le bas deux rails 23 entre lesquels peut être glissé le support de lame 24.
Le déflecteur 3 est typiquement réalisé en un matériau relativement souple, comme par exemple un thermoplastique élastomère alors que le corps 21 est réalisé en un matériau plastique plus dur, comme par exemple du polypropylène (PP) ou du polyéthylène haute densité (PEHD). Les matériaux de ces deux éléments étant différents l'un de l'autre, ils sont classiquement réalisés par co-extrusion pour assurer leur solidarisation.

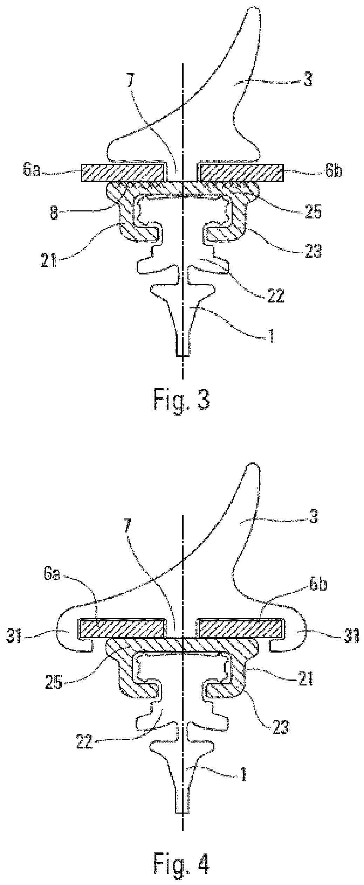

Les figures 3 à 6 montrent des balais d'essuie-glaces sur lesquels ont été apportées des améliorations conformément à l'invention, en retenant certaines caractéristiques des balais des figures 1 et 2. Les éléments de ces figures qui sont similaires à ceux des figures précédentes portent le même nombre de référence.
Les balais, dans ces modes de réalisation de l'invention, comportent, eux aussi, une lame racleuse 22 comprenant un pied de lame 1 en forme de sapin inversé, qui est rattaché par l'intermédiaire d'une bande mince 4, à un support de lame 24. Le support de lame 24 est inséré, comme dans le cas précédent, dans deux rails 23 qui s'étendent vers le bas à partir d'un corps 21.
Par ailleurs le balai comporte un déflecteur 3 profilé aérodynamiquement qui est situé en partie haute du balai.

A la différence cependant des deux balais de l'art antérieur, le corps 21 ne comporte pas de logement pour une vertèbre et se limite à une paroi 25 ayant la forme d'une plaque plane horizontale, de laquelle s'étendent les deux rails 23. En conséquence c'est le déflecteur 3 qui présente, à sa partie inférieure, deux rainures horizontales, en forme de gorges, dans lesquelles viennent s'insérer les deux vertèbres 6a et 6b, pour assurer le nécessaire cintrage du balai. Pour faciliter la production du balai et maintenir l'interchangeabilité des vertèbres avec celles des productions précédentes, les vertèbres ont la même envergure latérale que celles utilisées dans l'art antérieur qui est représenté par la figure 1. Notamment elles dépassent latéralement de l'envergure du déflecteur 3 telle qu'il était défini dans l'art antérieur, comme c'était le cas dans le cas du premier mode de réalisation.
Les rainures sont creusées verticalement dans le matériau du déflecteur 3, en direction du haut à partir de sa face inférieure et elles n'entourent donc pas les deux vertèbres 6A et 6b. Celles-ci sont, de ce fait, directement au contact, par leur face inférieure, de la paroi horizontale 25 du corps 21. Elles sont ainsi en contact, d'un côté avec le matériau peu rugueux du corps 21, et de l'autre côté avec le matériau comparativement plus rugueux du déflecteur 3.
Une des caractéristiques de l'invention réside dans ce contact entre les vertèbres et le matériau du déflecteur, tel qu'un thermoplastique polymère, qui est relativement souple par comparaison avec le matériau du corps 21, du type polypropylène ou PEHD, et qui surtout présente un coefficient de friction plus élevé.
Le déflecteur est, par ailleurs, relié au corps 21 par une cloison centrale 7 qui s'étend depuis le déflecteur jusqu'à la paroi horizontale 25, en passant entre les deux vertèbres 6a et 6b. La solidarisation du déflecteur 3 avec le corps 21 est assuré par cette cloison centrale, les deux pièces étant réalisées simultanément par un procédé de co-extrusion.

La figure 3 montre un premier mode de réalisation de l'invention. Dans cette version l'envergure latérale du déflecteur reste limitée et voisine de ce qu'on connaissait dans l'art antérieur, à savoir qu'elle dépasse latéralement du balai, tant au niveau du déflecteur 3 que du corps 21. De ce fait la surface de contact entre la face supérieure de chacune des vertèbres 6a ou 6b, avec la face inférieure du déflecteur risque d'être trop faible pour maintenir celles-ci en place et il serait alors nécessaire d'ajouter des clips de retenue à divers endroits sur la longueur du balai pour empêcher les vertèbres de sortir de leurs gorges. Pour pallier ce défaut le premier mode de réalisation prévoit l'implantation en une couche mince 8 d'un revêtement à fort coefficient de friction, sur la face supérieure de la paroi horizontale 25, au niveau de son contact avec les vertèbres 6a ou 6b. La combinaison d'un coefficient élevé de friction, d'une part entre la vertèbre et le matériau rugueux du déflecteur 3 et d'autre part, entre la vertèbre et la paroi 25 grâce à cette couche mince 8, garantit le maintien de la vertèbre dans sa gorge et élimine le besoin d'installer des clips de retenue.

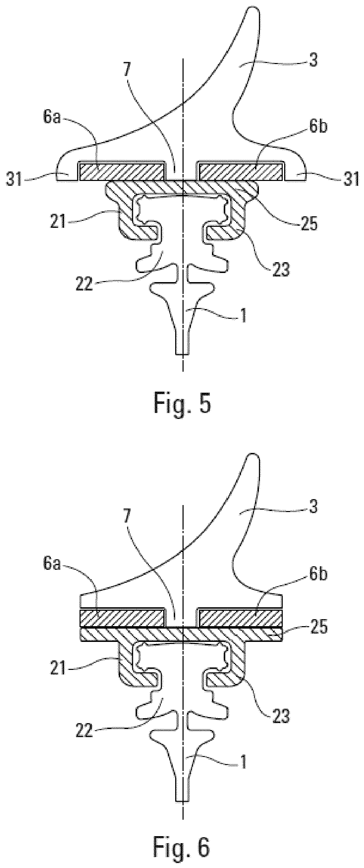

Les figures 4 et 5 montrent un deuxième et un troisième mode de réalisation dans lesquels l'envergure latérale de la face inférieure du déflecteur est augmentée, au point de déborder de celle des vertèbres 6a et 6b. Cette face inférieure du déflecteur se termine ainsi par deux ergots 31 formant des crochets qui viennent entourer l'extrémité latérale de chacune des vertèbres 6a et 6b. Ces vertèbres sont maintenues en place par ces ergots 31 et ne peuvent plus s'échapper latéralement. La mise en place des vertèbres dans le balai s'effectue soit latéralement en soulevant les ergots 31 si leur élasticité est suffisante, soit longitudinalement à partir d'une des extrémités du balai si cette élasticité est trop faible, pour autant que la friction des vertèbres contre la gorge du déflecteur 3 et contre la paroi horizontale 25, ne soit pas trop forte.
La figure 4 montre un ergot 31 qui enveloppe complètement l'extrémité des vertèbres 6a et 6b en se prolongeant en dessous de la face inférieure de la paroi horizontale 25 et en revenant vers le plan de symétrie central. Quant à la figure 5, elle montre une version simplifiée par rapport au second mode, dans laquelle l'ergot 31 recouvre l'extrémité latérale de la vertèbre 6a ou 6b concernée mais reste au dessus de la face inférieure de la paroi horizontale 25. Dans les deux cas l'ergot 31 forme une butée latérale pour la vertèbre 6a ou 6b et l'empêche de sortir de la gorge pratiquée dans la face inférieure du déflecteur.

La figure 6 montre un quatrième mode de réalisation dans lequel la face inférieure du déflecteur 3 s'étend latéralement de chaque côté jusqu'à l'extrémité des vertèbres 6a et 6b, sans, cette fois-ci, recouvrir verticalement cette extrémité, comme c'était le cas dans les deux modes de réalisation précédents. De son côté la paroi horizontale 25 s'étend elle aussi jusqu'à l'extrémité latérale des deux vertèbres, ce qui la différencie des autres modes de réalisation où les vertèbres débordaient latéralement de cette paroi. De la sorte la surface de contact entre les vertèbres 6a et 6b et, d'une part, la face inférieure du déflecteur 3 et, d'autre part, la face supérieure de la paroi horizontale 25 est nettement augmentée par rapport aux autres modes et notamment par rapport au premier mode de réalisation. La grande surface de contact des vertèbres 6a et 6b, avec, d'une part la face inférieure du déflecteur, qui est relativement rugueuse, et d'autre part la paroi horizontale 25 qui présente une envergure augmentée, suffit à assurer le maintien des vertèbres dans leur logement et à se dispenser de l'introduction de clips de retenue.

La présence d'une couche mince 8 à fort coefficient de friction a été représentée sur les figures dans le cas du premier mode de réalisation, mais il est bien évident qu'elle peut être mise en place sur la face supérieure de la paroi horizontale 25 dans les autres modes de réalisation et notamment dans le quatrième mode.

On va maintenant décrire l'apport fourni par l'invention.

Le positionnement latéral des vertèbres 6a et 6b par rapport au balai permet leur mise en place et leur retrait de façon très simple, puisqu'il peut s'effectuer préférentiellement par une translation latérale, comme c'était le cas dans l'art antérieur de la figure 1, sans qu'il soit nécessaire de la glisser tout le long d'une cavité interne au corps du balai, comme c'est le cas dans l'art antérieur de la figure 2. Cette facilité d'implantation est apportée par le fait que les vertèbres sont simplement glissées sur une surface plane, qui est formée par la face supérieure de la paroi horizontale 25.

Le maintien en place de ces vertèbres est assuré par des coefficients élevés de friction, le long des surfaces en contact; comme illustré dans le premier mode de réalisation, ou par une augmentation significative de la surface de contact entre les pièces, comme cela est illustré dans le cas des trois autres modes de réalisation. Les vertèbres, dont la mise en place dans la gorge du déflecteur 3 est simplifiée, comme indiqué ci-dessus, par cette introduction latérale, sont maintenues par la seule friction qu'elles ont avec tant la face inférieure du déflecteur 3 que la face supérieure de la paroi horizontale 25.

On retrouve ainsi la facilité de mise en place des vertèbres que l'on connaissait avec l'art antérieur de la figure 1, mais avec une meilleure rigidité due à la paroi horizontale 25 et donc un résultat correct pour l'essuyage comme celui observé avec l'art antérieur de la figure 2. Par ailleurs la réduction du corps 21 du balai à une simple paroi 25 agrémentée de deux crochets 23 réduit la complexité de sa réalisation.

## Revendications

1. Ensemble pour un balai d'essuie-glace de pare-brise de véhicule, notamment automobile, comportant un corps longitudinal (21) configuré pour porter une lame racleuse (22), au moins une vertèbre de rigidification (6a, 6b) s'étendant le long dudit corps (21) pour assurer son cintrage, et un déflecteur (3) s'étendant au-dessus dudit corps et présentant un profil aérodynamique,
ledit corps (21) comportant une paroi plane (25), ladite au moins une vertèbre étant en contact, pour au moins une partie d'une première face, avec une face de ladite paroi (25) et pour au moins une partie d'une seconde face avec le déflecteur (3), ledit corps (21) étant positionné entièrement du même côté par rapport à ladite première face, le corps (21) et le déflecteur (3) étant réalisés dans deux matériaux différents,
**caractérisé en ce qu'**il comporte deux vertèbres (6a, 6b) positionnées latéralement dans l'alignement l'une de l'autre et séparées par une cloison (7) du déflecteur (3).

2. Ensemble selon la revendication 1 dans lequel le corps (21) comporte deux crochets (23) s'étendant à partir de ladite paroi plane (25) et conformés pour porter, de façon amovible, ladite lame racleuse (22).

3. Ensemble selon la revendication 1 ou 2, dans lequel le corps (21) et le déflecteur (3) sont rattachés l'un à l'autre par ladite cloison (7) et réalisés par co-extrusion.

4. Ensemble selon l'une des revendications 1 à 3, dans lequel le matériau du déflecteur (3) au niveau de sa face en contact avec ladite vertèbre, présente un coefficient de friction supérieur à celui de ladite face de ladite paroi plane (25).

5. Ensemble selon l'une des revendications 1 à 4, dans lequel ladite face de ladite paroi plane (25) est au moins partiellement recouverte d'une couche mince (8) à coefficient de friction supérieur à celui du matériau de ladite paroi plane.

6. Ensemble selon la revendication 1 à 5, dans lequel la face du déflecteur (3) en contact avec ladite au moins une vertèbre (6a, 6b) s'étend latéralement au moins jusqu'à une extrémité latérale de ladite au moins une vertèbre.

7. Ensemble selon la revendication 6, dans lequel ladite extrémité latérale de la face du déflecteur (3) recouvre l'extrémité latérale de ladite au moins une vertèbre (6a, 6b), formant ainsi un ergot (31) de retenue latérale de ladite au moins une vertèbre.

8. Ensemble selon la revendication 7, dans lequel ledit ergot (31) s'étend de façon à recouvrir au moins partiellement la face de ladite paroi plane (25) opposée à la face en contact avec ladite au moins une vertèbre.

9. Ensemble selon la revendication 7, dans lequel ledit ergot (31) s'étend verticalement jusqu'au niveau de ladite seconde face.

10. Ensemble selon l'une des revendications 1 à 9, dans lequel ladite face de ladite paroi plane (25) s'étend latéralement jusqu'à une extrémité latérale de ladite vertèbre.

11. Ensemble selon la revendication 10, dans lequel ladite face du déflecteur (3) et ladite face de ladite paroi plane (25) s'étendent latéralement jusqu'à une extrémité latérale de ladite vertèbre.

12. Balai d'essuie-glace de pare-brise de véhicule, notamment automobile, comportant un ensemble selon l'une des revendications 1 à 11, et une lame racleuse (22) portée par ledit corps (21).

## Patentansprüche

1. Anordnung für ein Scheibenwischerblatt für eine Windschutzscheibe eines Fahrzeugs, insbesondere eines Kraftfahrzeugs, welche einen Längskörper (21), der dafür ausgelegt ist, einen Wischgummi (22) zu tragen, wenigstens eine Versteifungsleiste (6a, 6b), die sich entlang des Körpers (21) erstreckt, um seine Krümmung sicherzustellen, und einen Windabweiser (3), der sich oberhalb des Körpers erstreckt und ein aerodynamisches Profil aufweist, umfasst,
wobei der Körper (21) eine ebene Wand (25) umfasst, wobei die wenigstens eine Leiste sich für wenigstens einen Teil einer ersten Seite mit einer Seite der Wand (25) und für wenigstens einen Teil einer zweiten Seite mit dem Windabweiser (3) in Kontakt befindet, wobei der Körper (21) bezüglich der ersten Seite vollständig auf derselben Seite positioniert ist, wobei der Körper (21) und der Windabweiser (3) aus zwei verschiedenen Materialien hergestellt sind,
**dadurch gekennzeichnet, dass** sie zwei Leisten (6a, 6b) aufweist, die seitlich zueinander fluchtend positioniert und durch eine Trennwand (7) des Windabweisers (3) getrennt sind.

2. Anordnung nach Anspruch 1, wobei der Körper (21) zwei Haken (23) umfasst, die sich von der ebenen Wand (25) aus erstrecken und dafür ausgebildet sind, den Wischgummi (22) lösbar zu tragen.

3. Anordnung nach Anspruch 1 oder 2, wobei der Körper (21) und der Windabweiser (3) durch die Trennwand (7) miteinander verbunden und durch Koextrusion hergestellt sind.

4. Anordnung nach einem der Ansprüche 1 bis 3, wobei das Material des Windabweisers (3) an seiner Seite, die sich mit der Leiste in Kontakt befindet, einen Reibungskoeffizienten aufweist, der größer als derjenige der Seite der ebenen Wand (25) ist.

5. Anordnung nach einem der Ansprüche 1 bis 4, wobei die Seite der ebenen Wand (25) wenigstens teilweise mit einer dünnen Schicht (8) mit einem Reibungskoeffizienten bedeckt ist, der größer als derjenige des Materials der ebenen Wand ist.

6. Anordnung nach einem der Ansprüche 1 bis 5, wobei die Seite des Windabweisers (3), die sich in Kontakt mit der wenigstens einen Leiste (6a, 6b) befindet, sich seitlich wenigstens bis zu einem seitlichen Ende der wenigstens einen Leiste erstreckt.

7. Anordnung nach Anspruch 6, wobei das seitliche Ende der Seite des Windabweisers (3) das seitliche Ende der wenigstens einen Leiste (6a, 6b) bedeckt, wobei es auf diese Weise einen Ansatz (31) zum seitlichen Halten der wenigstens einen Leiste bildet.

8. Anordnung nach Anspruch 7, wobei sich der Ansatz (31) derart erstreckt, dass er wenigstens teilweise die Seite der ebenen Wand (25) bedeckt, die der Seite, die sich mit der wenigstens einen Leiste in Kontakt befindet, gegenüberliegt.

9. Anordnung nach Anspruch 7, wobei sich der Ansatz (31) vertikal bis zur Höhe der zweiten Seite erstreckt.

10. Anordnung nach einem der Ansprüche 1 bis 9, wobei sich die Seite der ebenen Wand (25) seitlich bis zu einem seitlichen Ende der Leiste erstreckt.

11. Anordnung nach Anspruch 10, wobei sich die Seite des Windabweisers (3) und die Seite der ebenen Wand (25) seitlich bis zu einem seitlichen Ende der Leiste erstrecken.

12. Scheibenwischerblatt für eine Windschutzscheibe eines Fahrzeugs, insbesondere eines Kraftfahrzeugs, welches eine Anordnung nach einem der Ansprüche 1 bis 11 und einen Wischgummi (22), der von dem Körper (21) getragen wird, umfasst.

## Claims

1. Assembly for a windscreen wiper of a vehicle, notably a motor vehicle, comprising a longitudinal body (21) configured to bear a scraper blade (22), at least one rigidifying spine (6a, 6b) extending along said body (21) to ensure the bending thereof, and a deflector (3) extending above said body and having an aerodynamic profile,
said body (21) comprising a flat wall (25), said at least one spine being in contact, for at least a part of a first face, with a face of said wall (25), and for at least a part of a second face, with the deflector (3), said body (21) being positioned entirely on the same side relative to said first face, the body (21) and the deflector (3) being produced in two different materials,
**characterized in that** it comprises two spines (6a, 6b) positioned laterally in the alignment of one another and separated by a partition (7) of the deflector (3).

2. Assembly according to Claim 1, wherein the body (21) comprises two hooks (23) extending from said flat wall (25) and conformed to bear, removably, said scraper blade (22) .

3. Assembly according to Claim 1 or 2, wherein the body (21) and the deflector (3) are attached to one another by said partition (7) and produced by co-extrusion.

4. Assembly according to one of Claims 1 to 3, wherein the material of the deflector (3) at its face in contact with said spine, has a friction coefficient greater than that of said face of said flat wall (25).

5. Assembly according to one of Claims 1 to 4, wherein said face of said flat wall (25) is at least partially covered by a thin layer (8) with friction coefficient greater than that of the material of said flat wall.

6. Assembly according to Claims 1 to 5, wherein the face of the deflector (3) in contact with said at least one spine (6a, 6b) extends laterally at least to a lateral end of said at least one spine.

7. Assembly according to Claim 6, wherein said lateral end of the face of the deflector (3) covers the lateral end of said at least one spine (6a, 6b), thus forming a lateral retaining lug (31) for said at least one spine.

8. Assembly according to Claim 7, wherein said lug (31) extends so as to at least partially cover the face of said flat wall (25) opposite the face in contact with said at least one spine.

9. Assembly according to Claim 7, wherein said lug (31) extends vertically to said second face.

10. Assembly according to one of Claims 1 to 9, wherein said face of said flat wall (25) extends laterally to a lateral end of said spine.

11. Assembly according to Claim 10, wherein said face of the deflector (3) and said face of said flat wall (25) extend laterally to a lateral end of said spine.

12. Windscreen wiper of a vehicle, notably a motor vehicle, comprising an assembly according to one of Claims 1 to 11, and a scraper blade (22) borne by said body (21).
